Europäisches Patentamt

European Patent Office

Office européen des brevets

(11) Publication number: **0 436 367 B1**

## EUROPEAN PATENT SPECIFICATION

(45) Date of publication of patent specification: **15.11.95**

(51) Int. Cl.⁶: **C08J 9/18**, C08K 5/06, C08L 25/00

(21) Application number: **90314113.3**

(22) Date of filing: **21.12.90**

The file contains technical information submitted after the application was filed and not included in this specification

(54) **Process for the preparation of fire-retardant expandable thermoplastic beads.**

(30) Priority: **26.12.89 US 456400**

(43) Date of publication of application:
**10.07.91 Bulletin 91/28**

(45) Publication of the grant of the patent:
**15.11.95 Bulletin 95/46**

(84) Designated Contracting States:
**BE DE DK FR GB IT NL SE**

(56) References cited:
**AU-A- 547 069**
**DE-A- 1 946 441**
**FR-A- 1 596 741**

(73) Proprietor: **ARCO Chemical Technology, L.P.**
**Two Greenville Crossing**
**4001 Kennett Pike, Suite 238**
**Greenville, Delaware 19807 (US)**

(72) Inventor: **Sonnenberg, Fred M.**
**50 Merbrook Lane**
**Merion,**
**Pennsylvania 19066 (US)**
Inventor: **Hajnik, Dennis M.**
**472 Scott Drive**
**West Chester,**
**Pennsylvania 19380 (US)**

(74) Representative: **Cropp, John Anthony David et al**
**MATHYS & SOUIRE**
**100 Grays Inn Road**
**London, WC1X 8AL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

FIELD OF THE INVENTION:

This invention pertains to methods for the preparation of fire-retardant expandable vinyl aromatic polymer beads which may be formed into molded foam products.

BACKGROUND OF THE INVENTION:

Foamed thermoplastic polymers enjoy widespread use in building construction due to their low density and excellent heat insulating properties. For such use, it is desirable that the foam be fire-retardant in order to avoid any potential safety hazard. A variety of halogenated organic compounds have been proposed as additives for this purpose. While these compounds can effectively render foams resistant to fire, the presence of a fire-retardant agent can adversely affect the foaming process and the physical properties of the final foamed product. Moreover, certain halogenated organic compounds require the use of synergists such as peroxides to be effective at low concentrations.

U.S. Pat. No. 3,590,014 teaches that polystyrene beads containing a volatile hydrocarbon foaming agent may be coated with a mixture of 2,4,6-tribromophenyl allyl ether and pentabromophenyl allyl ether by tumbling the impregnated beads with the fire-retardant agents and an adhesive. Alternatively, the fire-retardant agent may be applied as a non-adhered powder coating. These methods require a separate impregnation step and do not yield beads having the fire-retardant physically incorporated within the polymer.

Brit. Pat. No. 1,170,960 teaches the preparation of expandable polystyrene beads containing a bromophenyl allyl ether by polymerizing styrene in aqueous suspension in the presence of a volatile foaming agent and the fire-retardant agent. The beads thus obtained are then coated with an additional amount of the bromophenyl allyl ether. The use of an adhesive such as a wax, oil, or ester to bind the fire retardant agent to the bead surface is preferred. The presence of the bromophenyl allyl ether during the free-radical polymerization step may interfere with the polymerization due to termination reactions and may thus adversely affect the molecular weight and physical properties of the final molded foam. In addition, two separate steps (impregnation and coating) are necessary.

French Pat. No. 2,413,420 teaches coating expandable polystyrene particles with a film-forming polymer latex and a fireproofing agent such as pentabromo phenyl allyl ether. This method for the preparation of fire-retardant expandable polystyrene beads requires several steps and introduces other substances beside the fire-retardant and foaming agent into the beads.

Brit. Pat. Nos. 1,157,116, 1,356,401 and 1,182,964 teach the preparation of a fire-retardant foamed polymer board wherein a heat-softened polymer resin, a bromophenyl allyl ether, and a volatile foaming agent are intimately mixed in an extruder prior to extrusion. This method is not suitable for the preparation of fire retardant expandable polymer beads.

It is clear that there is a need for simpler methods of preparing expandable thermoplastic beads containing bromophenyl allyl ethers. Such methods should not interfere with the ability to mold the expandable beads into molded foam products or compromise the physical properties of such products.

AU-A-547069 describes a process which comprising forming an aqueous suspension of polystyrene beads, blowing agent, and a compound, heating the suspension and then separating the beads.

According to the present invention, there is provided a method for preparing fire-retardant expandable thermoplastic beads comprising forming an aqueous suspension of 100 parts by weight vinyl aromatic polymer particles, from 50 to 500 parts by weight water, an effective amount of a suspending agent, from 0.1 to 1.5 parts by weight of 2,4,6-tribromophenyl allyl ether, and from 3 to 20 parts by weight of a $C_4$-$C_6$ aliphatic hydrocarbon foaming agent. The aqueous suspension is heated at a temperature of from about 40°C to 140°C for a period of from about 1 to 15 hours to incorporate the bromophenyl allyl ether and the foaming agent into the polymer particles and to form fire-retardant expandable thermoplastic beads, which are then separated from the water. This process yields expandable thermoplastic beads which can be readily formed into molded foam articles having excellent physical and fire-retardant properties.

The invention will now be described in greater detail with the aid of the accompanying drawings in which:

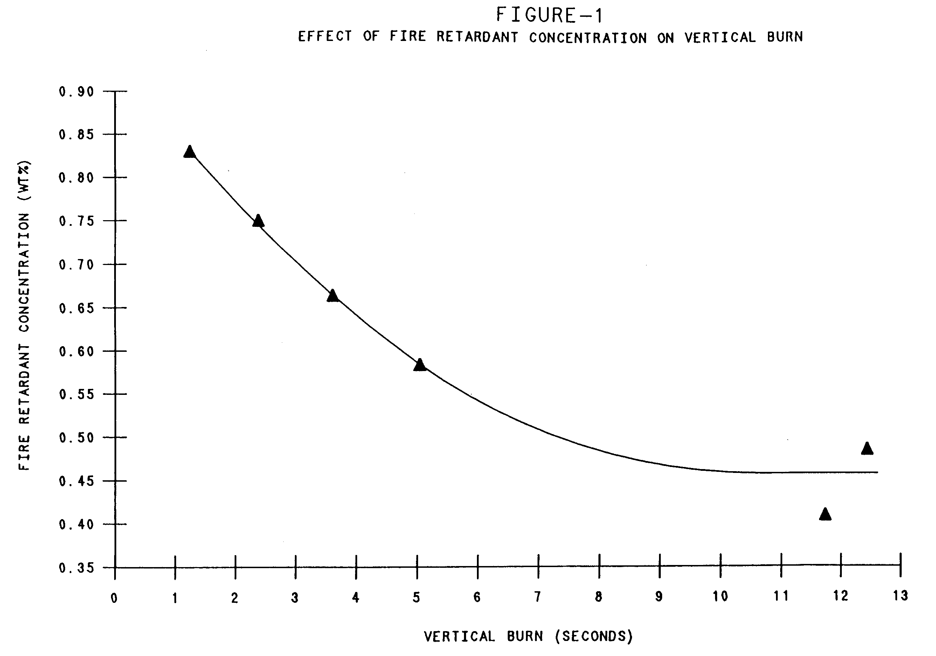

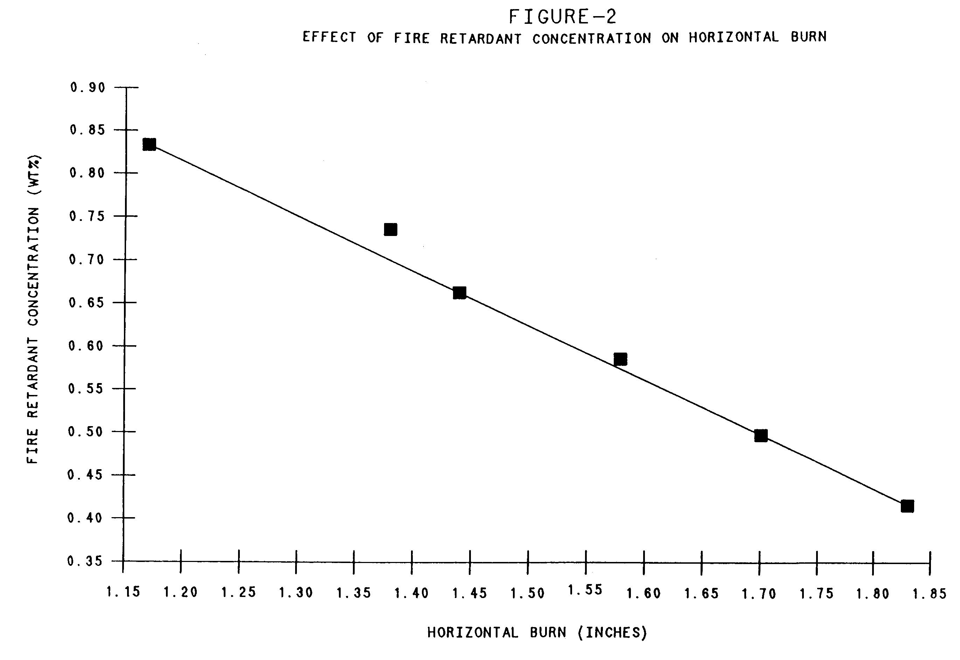

Figures 1 and 2 illustrate the effect of 2,4,6-tribromophenyl allyl ether on the flame resistance of molded foam articles obtained using beads prepared in accordance with the process of this invention.

DETAILED DESCRIPTION OF THE INVENTION

The vinyl aromatic polymer particles suitable for use in the process of this invention may be spherical or irregularly shaped particles of any of the thermoplastic vinyl aromatic polymers usable in the preparation of molded foam articles. Although homopolymers or copolymers of any vinyl aromatic monomer may be employed, styrene and substituted styrene monomers are preferred. Examples of suitable vinyl aromatic monomers include, but are not limited to, styrene, $\alpha$-methyl styrene, ar-methyl styrene, ar-ethyl styrene, ar-isopropyl styrene, ar-tert-butyl styrene, vinyl toluene, vinyl xylene, ar-chlorostyrene, and vinyl naphthalene. Minor amounts of other ethylenically unsaturated copolymerizable monomers may also be used, including, for example, butadiene, acrylic acid, methacrylic acid, maleic anhydride, methyl methacrylate, and acrylonitrile. The vinyl aromatic polymer may be rubber modified with an elastomer such as polybutadiene or styrene/butadiene block or random copolymers. The vinyl aromatic polymer particles should preferably be from 0.1 to 2 mm in average diameter. Methods of obtaining suitable particles such as suspension polymerization or pelletization are well known in the art.

The 2,4,6-tribromophenyl allyl ether employed in the process may contain minor amounts of other isomers or other bromophenyl allyl ethers containing differing numbers of bromine substituents. To render the vinyl aromatic polymer particles effectively fire-retardant, from 0.1 to 1.5 parts by weight of the bromophenyl allyl ether per 100 parts by weight of the particles is preferably present in the aqueous suspension. Most preferably, the level of bromophenyl allyl ether is from 0.3 to 1.0 parts per weight per 100 parts by weight of the particles.

Suitable $C_4$-$C_6$ aliphatic hydrocarbon foaming agents include n-butane, isobutane, n-pentane, isopentane, n-hexane, 2-methyl pentane, 3-methyl pentane, cyclohexane, cyclopentane, and cyclobutane. Although from 3 to 20 parts by weight foaming agent per 100 parts by weight vinyl aromatic polymer particles may be used, the preferred amount is from 5 to 12 parts foaming agent.

These components are suspended in from 50 to 500 parts (preferably, 75 to 250 parts) by weight water per 100 parts by weight of the particles using an effective amount of one or more suitable suspending agents. Any of the suspending agents useful in the suspension impregnation of vinyl aromatic polymer particles may be used. Examples of suitable suspending agents include finely divided water-insoluble inorganic substances such as tricalcium phosphate, zinc oxide, bentonite, talc, kaolin, magnesium carbonate, and aluminum oxide as well as water-soluble polymers such as polyvinyl alcohol, alkyl aryl sulfonates, hydroxyethyl cellulose, polyacrylic acid, methyl cellulose, and polyvinyl pyrrolidone. Auxiliary suspending agents such as sodium linear alkylbenzene sulfonates may also be employed. The use of tricalcium phosphate together with a sodium linear alkylbenzene sulfonate is particularly preferred. The amount of the suspending agent necessary will vary depending on a number of factors but will generally be from 0.01 to 1 part by weight per 100 parts by weight of the vinyl aromatic polymer particles. One or more surfactants such as a polyoxyalkylene (e.g. polyoxyethylene) derivative of sorbitan monolaurate or other fatty acid ester, an ethylene oxide/propylene oxide block copolymer, or other non-ionic or anionic surface active agent can be added to the aqueous suspension if desired. The preferred amount of surfactant is from 0.01 to 1 part by weight per 100 parts by weight vinyl aromatic polymer particles.

The aqueous suspension is then heated, preferably while stirring or mixing, at a temperature of from 40°C to 140°C (preferably, from 50°C to 130°C) for a period of from 1 to 15 hours (preferably, from 2 to 10 hours) until the bromophenyl allyl ether and the aliphatic hydrocarbon foaming agent are incorporated into the vinyl aromatic polymer particles. The temperature may advantageously be varied during this impregnation step.

Following impregnation, the fire-retardant expandable vinyl aromatic polymer beads are separated from the water using an appropriate method such as filtration, centrifugation, or decantation. The beads may be washed with additional water and then dried, if desired. If a suspending agent such as tricalcium phosphate is used, it may be desirable to first wash the beads with dilute acid (hydrochloric acid, for example) to remove the suspending agent.

The fire-retardant expandable vinyl aromatic polymer beads produced by the process of this invention may be readily shaped into molded foam articles by heating. The beads expand and fuse together to form the molded article. Prior to the final molding step, the beads preferably are pre-expanded. Such methods of preparing molded-bead foams are well-known and are described, for example, in Ingram et al "Polystyrene and Related Thermoplastic Foams" Plastic Foams, Marcel Dekker (1973), Part II, Chapter 10, pp. 531-581, Ingram "Expandable Polystyrene Processes" Addition and Condensation Polymerization Process American Chemical Society (1969), Chapter 33, pp. 531-535.

Molded foam articles prepared using the fire-retardant expandable vinyl aromatic beads of this invention are highly resistant to flame, even when relatively low levels of the bromophenyl allyl ether are present. The use of peroxy synergists is not necessary in order to achieve satisfactory fire retardancy. The bromophenyl allyl ether is incorporated uniformly within the beads rather than coated on the surface of the beads as in prior art methods and thus does not interfere with the fusion of the beads when they are expanded into molded foam articles. The density, tensile strength, heat resistance and other physical and mechanical properties of the foams are unaffected by the presence of the bromophenyl allyl ether if the process of this invention is employed.

Without further elaboration, it is believed that one skilled in the art can, using the proceeding description, utilize the present invention to its fullest extent. The following examples, therefore, are to be considered as merely illustrative and not limitative of the claims or remainder of the disclosure in any way whatsoever.

EXAMPLES-GENERAL PROCEDURES

FOAMING METHOD:

Fire-retardant expandable polystyrene beads were prepared as described below, pre-expanded, and then molded by vacuum charging to a 50.8 x 203.2 mm (2" x 8") diameter preheated mold cavity. The beads were fused at about 115°C for 5-10 seconds in the mold; the resulting foam disc was then cooled by circulating water in the mold.

VERTICAL TEST METHOD:

A number of 152.4 x 25.4 x 12.7 mm (6X1X1/2 inch) specimens are cut from each foam disc and conditioned at 60°C under vacuum for 16 hours. Each specimen is hung lengthwise from a clamp and a microburner having a 19.05 mm (3/4 inch) yellow flame is used to contact the bottom edge of the foam sample for 3 seconds. The average vertical burn time (time from the withdrawal of the flame to flameout of the foam) for 5 samples is determined.

HORIZONTAL TEST METHOD:

A number of 152.4 x 50.8 x 12.7 mm (6X2X1/2 inch) specimens are cut from each foam disc and conditioned at 60°C under vacuum for 16 hours. The test apparatus consists of a 4 mesh steel hardware cloth held by clamps and a ring stand so that the 76.2 mm x 203.2 mm (3" x 8") section is horizontal and 12.7 mm (1/2") above a Bunsen burner equipped with a wing tip top. The test specimen is placed flat on the hardware cloth, with the 152.4 mm x 50.8 mm (6" x 2") surface of the specimen horizontal. One end of the specimen is in contact with the upturned end of the hardware cloth.

The Bunsen burner with the wing tip top is adjusted to provide a blue flame whose visible portion is 38.1 mm (1 1/2") high. The burner is then placed under the upturned end of the specimen support so that a long edge of the flame is applied to the front end of the specimen. The flame is applied for one minute and then removed from the specimen.

The duration of burning of the specimen, if any, after removal of the test flame is noted. The extent of burning of the specimen during and after application of the test flame is measured from the end exposed to the flame.

EXAMPLES 1-4

These examples illustrate the preparation of fire-retardant expandable polystyrene beads at various temperatures in accordance with the process of this invention.

Sealable soda pop bottles were charged with 100 mL distilled water, 2.0 g tricalcium phosphate (suspending agent), 0.1 g Tween® 20 (a polyoxyalkylene derivative of sorbitan monolaurate, sold by ICI America), 2.0 mL 1% Nacconol® (sodium linear alkyl benzene sulfonate, sold by Stepan Chemical Co.), 0.833 g 2,4,6-tribromophenyl allyl ether (obtained from Ameribrom, a division of Dead Sea Bromine Co.) 100 g of polystyrene beads (ave. diameter ca. 1 mm; 220,000 molecular weight), and 8.1 g n-pentane. The bottles were shaken, sealed, and placed in a bottle tumbler. The bottles were heated from 55°C to the temperature shown in Table I over a 1.75 hr. period, maintained at that temperature for 1.5 hr., then cooled to 85°C for 1 hr., cooled to 60°C for 1 hr., and finally cooled to 45°C for 1 hr. The impregnated beads were collected by filtration, washed with 1N HCl, and tray dried.

4

Substantially all of the 2,4,6-tribromophenyl alkyl ether incorporated into the polystyrene beads in each case, although lower impregnation temperatures appeared to favor more complete inclusion of the fire-retardant agent. In each case, however, the flame resistance of the molded foam specimen (as measured by vertical burn and horizontal burn) was excellent (Table I).

EXAMPLES 5-11

Expandable polystyrene beads containing varying levels of 2,4,6-tribromophenyl allyl ether were prepared using the procedure described for examples 1-4. The impregnations were carried out at 120°C for 2 hours. Molded foam specimens were prepared and tested in the same manner as described above. The results of the vertical and horizontal burn tests are shown in Figures 1 and 2.

EXAMPLE 12

The preparation of expandable fire-retardant polystyrene beads by the process of this invention on a large scale is demonstrated by this example. A 3785ℓ (100 gallon) reactor was charged with 177 Kg water, 177 Kg polystyrene beads (ave. diameter ca. 1 mm; 220,000 molecular weight), and 1.19 Kg tricalcium phosphate. A premix of 9.0 Kg water, 1.47 Kg (0.833 wt. % based on wt. of polystyrene beads) 2,4,6-tribromophenyl allyl ether, 0.19 Kg Tween® 20, 0.32 Kg tricalcium phosphate and 0.036 Kg Nacconol® was then added. After heating the aqueous suspension to 55°C, 14.5 Kg n-pentane was added over a 3 hour period. During the addition of the blowing agent, the temperature was increased from 55°C to 110°C over a 1.33 hr. period. The suspension was then heated from 110°C to 120°C over 0.58 hr. held at 120°C for 1.5 hr., and then cooled to 85°C over 1 hr., cooled to 60°C over 1 hr., and finally cooled to 45° over 1 hr.

The impregnated beads were collected and treated in the same manner as described in Examples 1-4 and then molded into foam discs and tested for flame resistance as described previously. The results of the vertical and horizontal burn tests at two different foam densities are shown in Table II.

TABLE I

| Example No. | Max Temp. (°C) | Vt. % Br. Found | % Theor. Br. Incorp. | Vertical Burn (sec.) | Horizontal Burn mm (in.) |
|---|---|---|---|---|---|
| 1 | 115 | 0.46 | 85 | 1.1 | 28.70 (1.13) |
| 2 | 110 | 0.47 | 87 | 1.0 | 31.50 (1.24) |
| 3 | 105 | 0.52 | 96 | 1.9 | 28.19 (1.11) |
| 4 | 100 | 0.52 | 96 | 1.5 | 29.97 (1.18) |

TABLE II

| Foam Density (lb/ft³) | Horizontal Burn mm (in.) | Vertical Burn (sec.) |
|---|---|---|
| 2.28 | 27.69 (1.09) | 1.0 |
| 0.98 | 32.51 (1.28) | 1.1 |

## Claims

1. A process for preparing fire-retardant expandable thermoplastic beads by forming an aqueous suspension of vinyl aromatic polymer particles, an effective amount of a suspending agent, a brominated

6

compound and an aliphatic hydrocarbon foaming agent, heating the suspension to incorporate the brominated compound and the foaming agent into the polymer particles to form fire-retardant expandable thermoplastic beads, and separating the beads from the water, characterised in that the brominated compound is 2,4,6-tribromophenyl allyl ether, the aqueous suspension comprises 100 parts by weight vinyl aromatic polymer particles, from 50 to 500 parts by weight water, from 0.1 to 1.5 parts by weight of the brominated compound, and from 3 to 20 parts by weight of the $C_4$-$C_6$ aliphatic hydrocarbon foaming agent, and the aqueous suspension is heated at a temperature of from 40°C to 140°C for a period of from 1 to 15 hours.

2. The process of claim 1 wherein the vinyl aromatic polymer particles are polystyrene particles.

3. The process of claim 1 or claim 2 wherein the suspending agent is tricalcium phosphate.

4. The process of any one of claims 1 to 3 wherein the $C_4$-$C_6$ aliphatic hydrocarbon foaming agent is n-pentane.

5. The process of any one of claims 1 to 4 comprising the additional steps of washing and drying the separated beads.

6. The process of any one of claims 1 to 5 wherein the average diameter of the vinyl aromatic polymer particles is from 0.1 to 2.0 mm.

7. The process of any one of claims 1 to 6 wherein the aqueous suspension additionally contains from 0.01 to 1 part by weight of a surfactant.

8. A process as claimed in claim 1 comprising:
(a) forming an aqueous suspension of 100 parts by weight polystyrene particles having an average diameter of from 0.1 to 2.0 mm, from 75 to 250 parts by weight water, from about 0.01 to 1 part by weight tricalcium phosphate suspending agent, from 0.01 to 1 part by weight of a non-ionic surfactant, from 0.3 to 1.0 part by weight of 2,4,6-tribromophenyl allyl ether, and from 5 to 12 parts by weight n-pentane foaming agent;
(b) heating the aqueous suspension at a temperature of from 50°C to 130°C for a period of from 2 to 10 hours to incorporate the 2,4,6-tribromophenyl allyl ether and n-pentane into the polystyrene particles to form fire-retardant expandable polystyrene beads;
(c) separating the beads from the water;
(d) washing the separated beads; and
(e) drying the washed beads.

9. The process of claim 8 wherein the separated beads are washed first with dilute hydrochloric acid and then with water in step (d).

10. The process of claim 8 or claim 9 wherein the non-ionic surfactant is a polyoxyethylene sorbitan fatty acid ester.

**Patentansprüche**

1. Verfahren zur Herstellung flammhemmender, expandierbarer thermoplastischer Perlen, bei dem man eine wässrige Suspension aus vinylaromatischen Polymerteilchen, einer wirksamen Menge eines Suspendiermittels, einer bromierten Verbindung und eines Treibmittels aus einem aliphatischen Kohlenwasserstoff herstellt, die Suspension zur Inkorporierung der bromierten Verbindung und des Treibmittels in die Polymerteilchen unter Bildung flammhemmender, expandierbarer thermoplastischer Perlen erhitzt und die Perlen aus dem Wasser abtrennt, dadurch gekennzeichnet, daß die bromierte Verbindung 2.4.6-Tribromphenylallylether ist, die wässrige Suspension 100 Gewichtsteile vinylaromatischer Polymerteilchen, 50 bis 500 Gewichtsteile Wasser, 0,1 bis 1,5 Gewichtsteile bromierte Verbindung und 3 bis 20 Gewichtsteile des $C_4$-$C_6$ aliphatischen Kohlenwasserstoff-Treibmittels enthält und die wässrige Suspension bei einer Temperatur von 40 bis 140°C während 1 bis 15 Stunden erhitzt wird.

2. Verfahren nach Anspruch 1, bei dem die vinylaromatischen Polymerteilchen Polystyrolteilchen sind.

**3.** Verfahren nach Anspruch 1 oder 2, bei dem das Suspendiermittel Tricalciumphosphat ist.

**4.** Verfahren nach einem der Ansprüche 1 bis 3, bei dem das $C_4$-$C_6$ aliphatische Kohlenwasserstoff-Treibmittel n-Pentan ist.

**5.** Verfahren nach einem der Ansprüche 1 bis 4, bei dem zusätzlich die abgetrennten Perlen gewaschen und getrocknet werden.

**6.** Verfahren nach einem der Ansprüche 1 bis 5, bei dem der mittlere Durchmesser der vinylaromatischen Polymerteilchen 0,1 bis 2,0 mm beträgt.

**7.** Verfahren nach einem der Ansprüche 1 bis 6, bei dem die wässrige Suspension zusätzlich 0,01 bis 1 Gewichtsteile eines oberflächenaktiven Mittels enthält.

**8.** Verfahren nach Anspruch 1, bei dem man:
a) eine wässrige Suspension aus 100 Gewichtsteilen Polystyrolteilchen mit einem mittleren Durchmesser von 0,1 bis 2,0 mm, 75 bis 250 Gewichtsteilen Wasser, etwa 0,01 bis 1 Gewichtsteil Tricalciumphosphat als Suspendiermittel, 0,01 bis 1 Gewichtsteil eines nichtionischen oberflächenaktiven Mittels, 0,3 bis 1,0 Gewichtsteil 2.4.6-Tribromphenylallylether und 5 bis 12 Gewichtsteile n-Pentan als Treibmittel herstellt;
b) die wässrige Suspension bei einer Temperatur von 50 bis 130°C während 2 bis 10 Stunden zur Inkorporierung des 2.4.6-Tribromphenylallylethers und n-Pentans in die Polystyrolteilchen unter Bildung der flammhemmenden, expandierbaren Polystyrolperlen erhitzt;
c) die Perlen vom Wasser abtrennt;
d) die abgetrennten Perlen wäscht und
e) die gewaschenen Perlen trocknet.

**9.** Verfahren nach Anspruch 8, bei dem die abgetrennten Perlen zuerst mit verdünnter Salzsäure und dann in Stufe (d) mit Wasser gewaschen werden.

**10.** Verfahren nach Anspruch 8 oder Anspruch 9, bei dem das nichtionische oberflächenaktive Mittel ein Polyoxyethylensorbitanester einer Fettsäure ist.

**Revendications**

**1.** Procédé pour préparer des perles expansibles thermoplastiques retardant la flamme par formation d'une suspension aqueuse de particules de polymère vinyl aromatique, d'une quantité efficace d'un agent de suspension, d'un composé bromé et d'un agent moussant hydrocarboné aliphatique, chauffage de la suspension pour incorporer le composé bromé et l'agent moussant dans les particules de polymère afin de former des perles expansibles thermoplastiques retardant la flamme, et séparation des perles et de l'eau, caractérisé en ce que le composé bromé est l'éther allylique de 2,4,6-tribromophényle, la suspension aqueuse comprend 100 parties en poids de particules de polymère vinyl aromatique, de 50 à 500 parties en poids d'eau, de 0,1 à 1,5 partie en poids du composé bromé et de 3 à 20 parties en poids de l'agent moussant hydrocarboné aliphatique en $C_{4-6}$, et que la suspension aqueuse est chauffée à une température de 40°C à 140°C pendant une période de 1 à 15 heures.

**2.** Procédé suivant la revendication 1, dans lequel les particules de polymère vinyl aromatique sont des particules de polystyrène.

**3.** Procédé suivant les revendications 1 ou 2, dans lequel l'agent de suspension est le phosphate tricalcique.

**4.** Procédé suivant l'une quelconque des revendications 1 à 3, dans lequel l'agent moussant hydrocarboné aliphatique en $C_{4-6}$ est le n-pentane.

**5.** Procédé suivant l'une quelconque des revendications 1 à 4, comprenant les étapes supplémentaires de lavage et de séchage des perles séparées.

**6.** Procédé suivant l'une quelconque des revendications 1 à 5, dans lequel le diamètre moyen des particules de polymère vinyl aromatique est de 0,1 à 2,0 mm.

**7.** Procédé suivant l'une quelconque des revendications 1 à 6, dans lequel la suspension contient de plus de 0,01 à 1 partie en poids d'un tensioactif.

**8.** Procédé suivant la revendication 1, comprenant :

(a) la formation d'une suspension aqueuse de 100 parties en poids de particules de polystyrène ayant un diamètre moyen de 0,1 à 2,0 mm, de 75 à 250 parties en poids d'eau, d'environ 0,01 à 1 partie en poids de phosphate tricalcique comme agent de suspension, de 0,01 à 1 partie en poids d'un tensioactif non ionique, de 0,3 à 1,0 partie en poids d'éther allylique de 2,4,6-tribromophényle, et de 5 à 12 parties en poids de n-pentane comme agent moussant;

(b) le chauffage de la suspension aqueuse à une température de 50°C à 130°C pendant une période de 2 à 10 heures pour incorporer l'éther allylique de 2,4,6-tribromophényle et le n-pentane dans les particules de polystyrène afin de former des perles expansibles thermoplastiques retardant la flamme;

(c) la séparation des perles et de l'eau;

(d) le lavage des perles séparées; et

(e) le séchage des perles lavées.

**9.** Procédé suivant la revendication 8, dans lequel les perles séparées sont d'abord lavées avec de l'acide chlorhydrique et ensuite avec de l'eau dans l'étape (d).

**10.** Procédé suivant la revendications 8 ou 9, dans lequel le tensioactif non ionique est un ester d'acide gras de polyoxyéthylène sorbitane.

FIGURE-1
EFFECT OF FIRE RETARDANT CONCENTRATION ON VERTICAL BURN

EP 0 436 367 B1

FIGURE-2
EFFECT OF FIRE RETARDANT CONCENTRATION ON HORIZONTAL BURN

FIRE RETARDANT CONCENTRATION (WT%)

HORIZONTAL BURN (INCHES)

EP 0 436 367 B1